(19) 

Europäisches Patentamt

European Patent Office

Office européen des brevets

(11) **EP 4 518 556 A1**

(12) **EUROPEAN PATENT APPLICATION**
published in accordance with Art. 153(4) EPC

(43) Date of publication:
**05.03.2025 Bulletin 2025/10**

(21) Application number: **23796812.8**

(22) Date of filing: **27.04.2023**

(51) International Patent Classification (IPC):
*H04W 74/08* (2024.01)    *H04W 76/14* (2018.01)
*H04W 76/11* (2018.01)    *H04L 1/18* (2023.01)
*H04W 92/18* (2009.01)

(52) Cooperative Patent Classification (CPC):
**H04L 1/18; H04W 74/08; H04W 76/11;
H04W 76/14; H04W 92/18**

(86) International application number:
**PCT/KR2023/005733**

(87) International publication number:
**WO 2023/211169 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 US 202263335644 P**

(71) Applicant: **LG Electronics Inc.
Yeongdeungpo-gu
Seoul 07336 (KR)**

(72) Inventors:
• **LEE, Youngdae
Seoul 06772 (KR)**

• **LEE, Seungmin
Seoul 06772 (KR)**
• **KIM, Seonwook
Seoul 06772 (KR)**
• **YANG, Suckchel
Seoul 06772 (KR)**
• **SEO, Hanbyul
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR PERFORMING SIDELINK COMMUNICATION IN WIRELESS COMMUNICATION SYSTEM**

(57)    A method and a device for performing sidelink communication in a wireless communication system are disclosed. The method by which a first terminal performs sidelink communication, according to one embodiment of the present disclosure, comprises the steps of: receiving a system information block (SIB) from a base station; and transmitting, on the basis that the SIB or pre-configuration information sets a first channel access priority class (CAPC) value for the specific SL radio bearer, data of a specific SL radio bearer to at least one other terminal by using the first CAPC value, wherein the data of the specific SL radio bearer is transmitted, on the basis that the SIB or pre-configuration information does not set the first CAPC value for the specific SL radio bearer, to at least one other terminal by using a second CAPC value, and the second CAPC value can be based on a PC5 5G QoS indicator (PQI) corresponding to the specific SL radio bearer.

FIG.9

RECEIVING A SIB FROM THE BASE STATION — S910

BASED ON THE SIB OR PRE-CONFIGURATION INFORMATION CONFIGURING A FIRST CAPC VALUE FOR A SPECIFIC SL RADIO BEARER, TRANSMITTING DATA OF THE SPECIFIC SL RADIO BEARER TO AT LEAST ONE OTHER UE USING THE FIRST CAPC VALUE — S920

**Description**

[TECHNICAL FIELD]

The present disclosure relates to a wireless communication system, and more particularly, to a method and device for performing sidelink communication in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing sidelink communication in a wireless communication system.

The technical problem of the present disclosure is to provide a method and device for configuring a TB (transport block) for sidelink resource transmission determined by a channel access method based on CAPC (channel access priority class).

The technical problems to be achieved by the present disclosure are not limited to the above-described technical objects, and other technical problems which are not described herein will be clearly understood by those skilled in the pertinent art from the following description.

[Technical Solution]

According to one embodiment of the present disclosure, a method of performing sidelink (SL) communication by a first user equipment (UE) in a wireless communication system may include receiving a system information block (SIB) from a base station; and based on the SIB or pre-configuration information configuring a first CAPC (channel access priority class) value for a specific SL radio bearer, transmitting data of the specific SL radio bearer to at least one other UE using the first SL CAPC value, and based on the SIB or the pre-configuration information not configuring the first CAPC for the specific SL radio bearer, data of the specific SL radio bearer may be transmitted to at least one other UE using the second CAPC value, and the second CAPC value may be based on a PQI (PC5 5G QoS indicator) corresponding to the specific SL radio bearer.

According to another embodiment of the present disclosure, A method for performing sidelink (SL) communication by a second user equipment (UE) in a wireless communication system may include based on a system information block (SIB) or pre-configuration information received from a base station configuring a first CAPC (channel access priority class) value for a specific SL radio bearer, receiving data of the specific SL radio bearer from a first UE through the first CAPC value; and transmitting a physical sidelink feedback channel (PSFCH) for data of the specific SL radio bearer to the first UE, and based on the SIB or the pre-configuration information not configuring the first CAPC for the specific SL radio bearer, the data of the specific SL radio bearer may be received from the first UE through a second CAPC value, and the second CAPC value may be based on the PQI (PC5 5G QoS indicator) corresponding to the specific SL radio bearer.

[Technical Effects]

According to one embodiment of the present disclosure, a method and device for performing sidelink communication in a wireless communication system may be provided.

As one embodiment of the present disclosure, a method and device for configuring a transport block (TB) for sidelink resource transmission determined by a channel access method based on a CAPC (channel access priority class) can be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a procedure for performing V2X or SL communication according to a transmission mode in a wireless communication system to which the present disclosure can be applied.
FIG. 8 illustrates a cast type for V2X or SL communication in a wireless communication system to which the present disclosure may be applied.
FIG. 9 is a diagram for explaining a process in which a first UE performs communication according to an embodiment of the present disclosure.
FIG. 10 is a diagram for explaining a process in which a second UE performs communication according to an embodiment of the present disclosure.
FIG. 11 is a diagram for explaining a signaling procedure of a base station, a first UE, and a second UE according to an embodiment of the present disclosure.
FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, **"/"** between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications) /GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212 (multiplexing and channel coding), TS 36.213(physical layer procedures), TS 36.300(overall description), TS 36.331(radio resource control) may be referred to.

For 3GPP NR, TS 38.211(physical channels and modulation), TS 38.212 (multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform

- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC (massive MTC), URLLC (Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

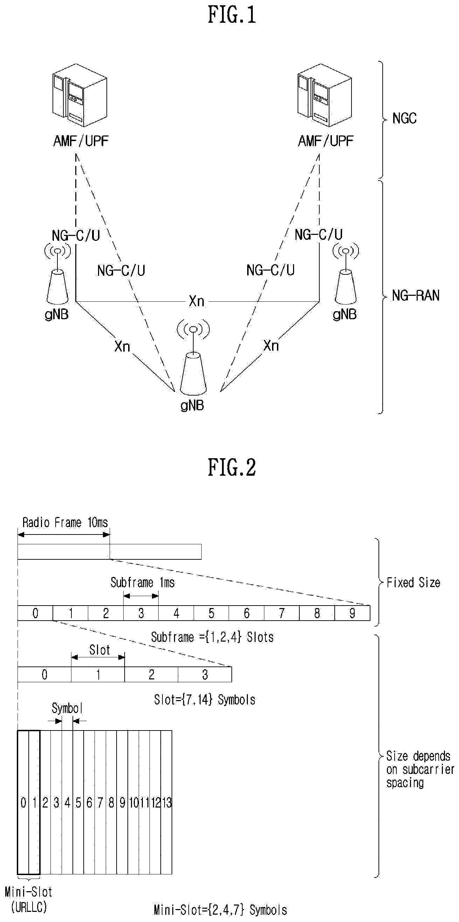

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10ms$. Here, a radio frame is configured with 10 subframes having a duration of $T_{sf} = (\Delta f_{max} N_f / 1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

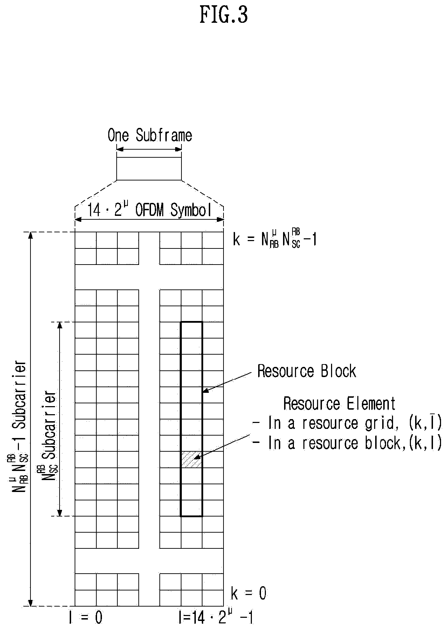

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

$$【\text{Equation 1}】$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

$$【\text{Equation 2}】$$

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

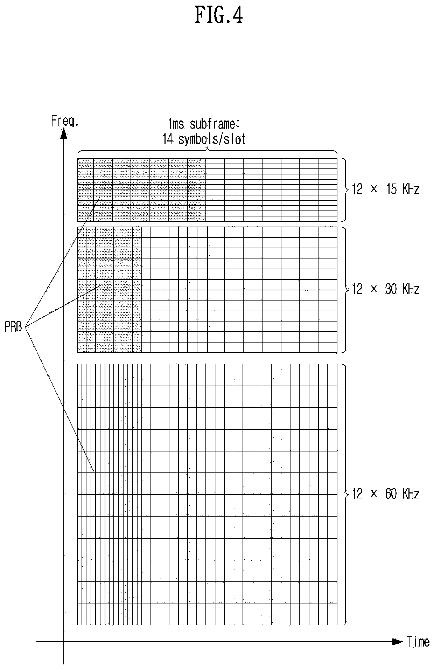

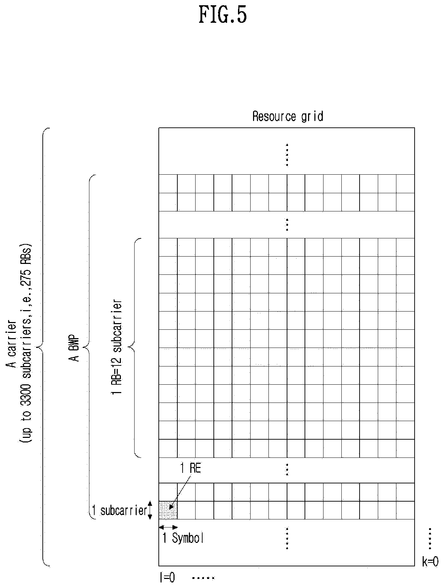

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

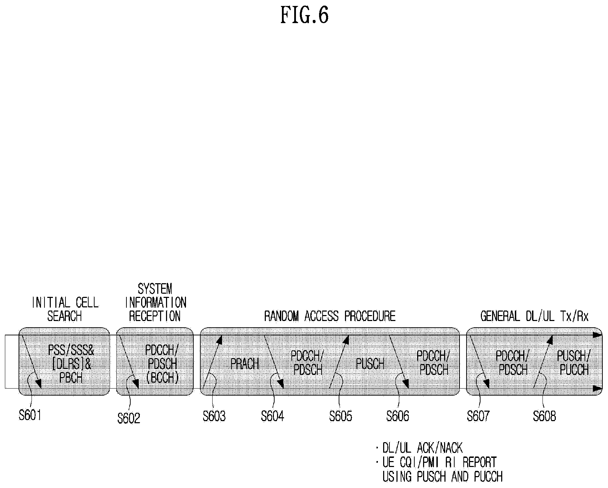

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table **5**]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL (Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

V2X (vehicle-to-everything)/side link (SL: sidelink) communication

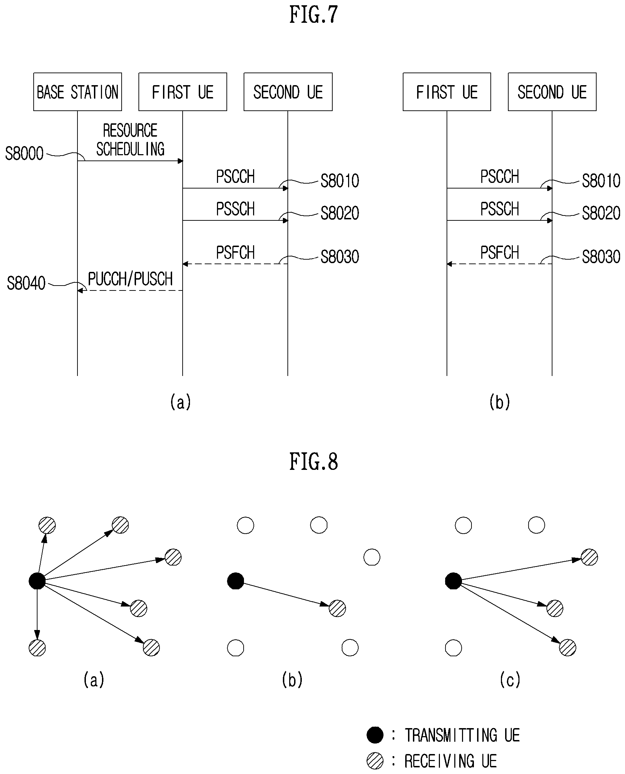

FIG. 7 illustrates a procedure for performing V2X or SL communication according to a transmission mode in a wireless communication system to which the present disclosure may be applied.

The embodiment of FIG. 7 may be combined with various embodiments of the present disclosure. In various embodiments of the present disclosure, the transmission mode may be referred to as a mode or a resource allocation mode. Hereinafter, for convenience of explanation, the transmission mode in LTE may be referred to as an LTE transmission mode, and the transmission mode in NR may be referred to as an NR resource allocation mode.

For example, FIG. 7(a) illustrates the operation of a UE related to LTE transmission mode 1 or LTE transmission mode 3. Alternatively, for example, FIG. 7(a) illustrates the operation of a UE related to NR resource allocation mode 1. For example, LTE transmission mode 1 may be applied to general SL communication, and LTE transmission mode 3 may be applied to V2X communication.

For example, Fig. 7(b) illustrates the operation of a UE associated with LTE transmission mode 2 or LTE transmission mode 4. Alternatively, for example, Fig. 7(b) illustrates the operation of a UE associated with NR resource allocation mode 2.

Referring to FIG. 7(a), in LTE transmission mode 1, LTE transmission mode 3, or NR resource allocation mode 1, the base station may schedule SL resources to be used by the UE for SL transmission (S8000). For example, the base station may transmit information related to SL resources and/or information related to UL resources to the first UE. For example, the UL resources may include PUCCH resources and/or PUSCH resources. For example, the UL resources may be resources for reporting SL HARQ feedback to the base station.

For example, the first UE may receive information related to a dynamic grant (DG) resource and/or information related to a configured grant (CG) resource from the base station. For example, the CG resource may include a CG type 1 resource or a CG type 2 resource. In the present disclosure, the DG resource may be a resource that the base station configures/allocates to the first UE via DCI. In the present disclosure, the CG resource may be a (periodic) resource that the base station configures/allocates to the first UE via DCI and/or an RRC message. For example, in the case of a CG type 1 resource, the base station may transmit an RRC message including information related to the CG resource to the first UE. For example, in the case of a CG type 2 resource, the base station may transmit an RRC message including information related to the CG resource to the first UE, and the base station may transmit DCI related to activation or release of the CG resource to the first UE.

The first UE may transmit PSCCH (e.g., Sidelink Control Information (SCI) or 1st-stage SCI) to the second UE based on the resource scheduling (S8010).

The first UE may transmit a PSSCH (e.g., a 2nd-stage SCI, a MAC protocol data unit (PDU), data, etc.) related to the PSCCH to the second UE (S8020).

The first UE may receive a PSFCH related to the PSCCH/PSSCH from the second UE (S8030). For example, HARQ feedback information (e.g., NACK information or ACK information) can be received from the second UE via the PSFCH.

The first UE may transmit/report HARQ feedback information to the base station via PUCCH or PUSCH (S8040). For example, the HARQ feedback information reported to the base station may be information generated by the first UE based on HARQ feedback information received from the second UE. For example, the HARQ feedback information reported to the base station may be information generated by the first UE based on a rule set in advance. For example, the DCI may be DCI for scheduling of SL. For example, the format of the DCI may be DCI format 3_0 or DCI format 3_1.

Referring to FIG. 7(b), in LTE transmission mode 2, LTE transmission mode 4 or NR resource allocation mode 2, the UE may determine SL transmission resources within SL resources set by the base station/network or preset SL resources. For example, the set SL resources or preconfigured SL resources may be a resource pool. For example, the UE may autonomously select or schedule resources for SL transmission. For example, the UE may perform SL communication by selecting resources by itself within the configured resource pool. For example, the UE may perform sensing and resource (re)selection procedures to select resources by itself within a selection window. For example, the sensing may be performed on a sub-channel basis.

A first UE that has selected a resource within a resource pool may transmit a PSCCH (e.g., SCI or 1st-stage SCI) to a second UE using the resource (S8010).

The first UE may transmit a PSSCH (e.g., 2nd-stage SCI, MAC PDU, data, etc.) related to the PSCCH to the second UE (S8020).

The first UE may receive a PSFCH related to PSCCH/PSSCH from the second UE (S8030).

Referring to FIG. 7(a) or FIG. 7(b), for example, a first UE may transmit an SCI to a second UE on a PSCCH. Or, for example, the first UE may transmit two consecutive SCIs (e.g., 2-stage SCIs) to the second UE on the PSCCH and/or the PSSCH. In this case, the second UE may decode the two consecutive SCIs (e.g., 2-stage SCIs) to receive the PSSCH from the first UE. In the present disclosure, the SCI transmitted on the PSCCH may be referred to as a first (1st) SCI, a first SCI, a first-stage SCI, or a 1st-stage SCI format, and the SCI transmitted on the PSSCH may be referred to as a second (2nd) SCI, a second SCI, a second-stage SCI, or a 2nd-stage SCI format. For example, a 1st-stage SCI format may include SCI format 1-A, and a 2nd-stage SCI format may include SCI format 2-A and/or SCI format 2-B.

Referring to FIG. 7(a) or FIG. 7(b), in step S8030, the first UE may receive the PSFCH based on the description to be described below. For example, the first UE and the second UE may determine the PSFCH resource based on the description to be described below, and the second UE may transmit the HARQ feedback to the first UE using the PSFCH resource.

Describes the UE procedure for reporting HARQ-ACK on sidelink as specified in TS 38.213.

*The UE may be indicated to transmit a PSFCH including HARQ-ACK information in response to the PSSCH reception by the SCI format scheduling the PSSCH reception. The UE provides HARQ-ACK information including ACK or NACK or only NACK.

The UE may be provided with a number of slots within the resource pool during a period of PSFCH transmission occasion resources by sl-PSFCH-Period. If the number of slots is 0, the PSFCH transmission of the UE within the resource pool is disabled.

The UE expects that slot $t'^{SL}_k (0 \leq k < T'_{max})$ includes PSFCH transmission occasion resources if k mod $N^{PSFCH}_{PSSCH} = 0$, where $t'^{SL}_k$ is defined in TS 38.214, $T'_{max}$ is the number of slots belonging to the resource pool within 10240 msec according to TS 38.214, and $N^{PSFCH}_{PSSCH}$ is provided by sl-PSFCH-Period.

The UE may be indicated by higher layers not to transmit a PSFCH containing HARQ-ACK information in response to receiving a PSSCH.

When a UE receives a PSSCH from a resource pool and the HARQ feedback enabled/disabled indicator field of the associated SCI format 2-A/2-B/2-C has value 1, the UE provides HARQ-ACK information in a PSFCH transmission from the resource pool. The UE transmits the PSFCH in the first slot that includes PSFCH resources and that corresponds to at least a number of slots provided by sl-MinTimeGapPSFCH of the resource pool after the last slot of the PSSCH reception.

The UE may be provided with a set of $M^{PSFCH}_{PRB,set}$ PRBs in the resource pool for PSFCH transmission including HARQ-ACK information in the physical resource block (PRB) of the resource pool by sl-PSFCH-RB-Set. The UE may be provided with a set of $M^{PSFCH}_{PRB,set}$ PRBs in the resource pool by sl-RB-SetPSFCH for PSFCH transmission including conflict information in the PRB of the resource pool. The UE expects that different PRBs are (pre-)set for conflict information and HARQ-ACK information. For the number of $N_{SUBCH}$ sub-channels for the resource pool provided by sl-NumSubchannel and the number of PSSCH slots associated with PSFCH slots less than or equal to $N^{PSFCH}_{PSSCH}$, the UE allocates $[(i+j N^{PSFCH}_{PSSCH}) M^{PSFCH}_{subch,slot}$ $(i+1+j N^{PSFCH}_{PSSCH}) M^{PSFCH}_{subch,slot}-1]$ PRBs from $M^{PSFCH}_{PRB,set}$ PRBs among the PSFCH slots and PSSCH slots associated with sub-channel j to slot i. Here, $M^{PSFCH}_{subch,slot}=M^{PSFCH}_{PRB,set}/(N_{subch} N^{PSFCH}_{PSSCH})$, $0 \leq i < N^{PSFCH}_{PSSCH}$, $0 \leq j < N_{subch}$, and the allocation starts in ascending order of i and continues in ascending order of j. The UE expects $M^{PSFCH}_{PRB,set}$ to be a multiple of $N_{subch} \cdot N^{PSFCH}_{PSSCH}$.

The UE determines the number of available PSFCH resources for multiplexing HARQ-ACK or conflict information in PSFCH transmission based on the indication by sl-PSFCH-CandidateResourceType as $R^{PSFCH}_{PRB,CS}=N^{PSFCH}_{type} \cdot M^{PSFCH}_{subch,slot} \cdot N^{PSFCH}_{CS}$, where $N^{PSFCH}_{CS}$ is the number of cyclic shift pairs for the resource pool provided by sl-NumMuxCS-Pair.

- When sl-PSFCH-CandidateResourceType is set to startSubCH, $N^{PSFCH}_{type}=1$, and $M^{PSFCH}_{subch,slot}$ PRBs are associated with the start sub-channel of the corresponding PSSCH.
- When sl-PSFCH-CandidateResourceType is set to allocSubCH, $N^{PSFCH}_{type}=N^{PSSCH}_{subch}$, and $N^{PSSCH}_{subch} \cdot M^{PSFCH}_{subch,slot}$ PRBs are associated with $N^{PSSCH}_{subch}$ sub-channels of the corresponding PSSCH.
- For conflict information, the corresponding PSSCH is determined based on sl-PSFCH-Occasion.

PSFCH resources are first indexed from $N^{PSFCH}_{type} \cdot M^{PSFCH}_{subch,slot}$ PRBs in ascending order of PRB index, and then from $N^{PSFCH}_{CS}$ cyclic shift pairs in ascending order of cyclic shift pair index.

The UE determines the index of the PSFCH resource for transmitting the PSFCH including HARQ-ACK information or conflict information in response to the PSSCH reception, which corresponds to the reserved resource, as $(P_{ID}+M_{ID}) mod_{R_{PRB,CS}}^{PSFCH}$. Here, $P_{ID}$ is a physical layer source identifier provided by SCI format 2-A/2-B/2-C that schedules PSSCH reception or SCI format 2-A/2-B/2-C that reserves resources for conflict information to be provided from other UEs. For HARQ-ACK information, if the UE detects SCI format 2-A having a cast type indicator field value of "01", $M_{ID}$ is an identifier of the UE that receives the PSSCH indicated by the upper layer, otherwise $M_{ID}$ is 0. For conflict information, $M_{ID}$ is 0.

For PSFCH transmission including HARQ-ACK information or conflict information, the UE determines the value $m_0$ from the cyclic shift pair index corresponding to the PSFCH resource index and from $N^{PSFCH}_{CS}$ using Table 6 below to calculate the value $\alpha$ of the cyclic shift.

Table 6 illustrates a set of cyclic shift pairs.

[Table 6]

| $N^{PSFCH}_{CS}$ | $m_0$ | | | | | |
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |

(continued)

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 2 | 0 | 3 | - | - | - | - |
| 3 | 0 | 2 | 4 | - | - | - |
| 6 | 0 | 1 | 2 | 3 | 4 | 5 |

For PSFCH transmission including HARQ-ACK information, the UE determines a $m_{cs}$ value as shown in Table 7 below if the UE detects an SCI format 2-A or SCI format 2-C having a cast type indicator field value of "01" or "10" to calculate the value $\alpha$ of the cyclic shift, and determines an $m_{cs}$ value as shown in Table 8 below if the UE detects an SCI format 2-B or 2-A having a cast type indicator field value of "11". For PSFCH transmission including conflict information, the UE determines an $m_{cs}$ value as shown in Table 9 below to calculate the value $\alpha$ of the cyclic shift. The UE applies one cyclic shift from a cyclic shift pair to a sequence used for PSFCH transmission.

Table 7 illustrates the mapping of cyclic shifts of a sequence for PSFCH transmission from a cyclic shift pair and HARQ-ACK information bit values when the HARQ-ACK information includes ACK or NACK.

[Table 7]

| HARQ-ACK value | 0 (NACK) | 1 (ACK) |
|---|---|---|
| Sequency cyclic shift | 0 | 6 |

Table 8 illustrates the mapping of cyclic shifts of a sequence for PSFCH transmission from a cyclic shift pair and HARQ-ACK information bit values when HARQ-ACK information contains only NACK.

[Table 8]

| HARQ-ACK value | 0 (NACK) | 1 (ACK) |
|---|---|---|
| Sequency cyclic shift | 0 | N/A |

Table 9 illustrates the mapping of the cyclic shift of a sequence for PSFCH transmission and the value of the conflict information bit from a cyclic shift pair.

[Table 9]

| Conflict information | Conflict information for the next time-reserved resource within SCI |
|---|---|
| Sequence cyclic shift | 0 |

FIG. 8 illustrates a cast type for V2X or SL communication in a wireless communication system to which the present disclosure may be applied. The embodiment of FIG. 8 may be combined with various embodiments of the present disclosure.

Referring to FIG. 8, FIG. 8(a) represents a broadcast type SL communication, FIG. 8(b) represents a unicast type SL communication, and FIG. 8(c) represents a group-cast type SL communication. In the case of a unicast type SL communication, a UE can perform one-to-one communication with another UE. In the case of a group-cast type SL communication, a UE may perform SL communication with one or more UEs within the group to which it belongs. In various embodiments of the present disclosure, SL group-cast communication may be referred to as SL multicast communication, SL one-to-many communication, etc.

Hereinafter, the HARQ (Hybrid Automatic Repeat Request) procedure is described. For example, SL HARQ feedback may be enabled for unicast. In this case, in non-Code Block Group (CBG) operation, if a receiving UE decodes a PSCCH targeting the receiving UE and the receiving UE successfully decodes a transport block associated with the PSCCH, the receiving UE may generate an ACK. Then, the receiving UE may transmit the HARQ-ACK to the transmitting UE. On the other hand, if the receiving UE fails to successfully decode a transport block associated with the PSCCH after the receiving UE decodes the PSCCH targeting the receiving UE, the receiving UE may generate a NACK. Then, the receiving UE may transmit the NACK to the transmitting UE.

Also, for example, SL HARQ feedback may be enabled for group-cast. For example, in non-CBG operation, two HARQ feedback options may be supported for group-cast.

(1) group-cast option 1: If the receiving UE fails to decode a transport associated with the PSCCH after the receiving UE decodes the PSCCH targeting the receiving UE, the receiving UE may transmit a NACK to the transmitting UE via the PSFCH. On the other hand, if the receiving UE decodes the PSCCH targeting the receiving UE and the receiving UE successfully decodes the transport block associated with the PSCCH, the receiving UE may not transmit an ACK to the transmitting UE.

(2) Group-cast option 2: If the receiving UE fails to decode a transport block associated with the PSCCH after the receiving UE decodes the PSCCH targeting the receiving UE, the receiving UE may transmit a NACK to the transmitting UE via the PSFCH. Then, if the receiving UE decodes the PSCCH targeting the receiving UE and the receiving UE successfully decodes the transport block associated with the PSCCH, the receiving UE may transmit an ACK to the transmitting UE via the PSFCH.

For example, if group-cast option 1 is used for SL HARQ feedback, all UEs performing group-cast communication may share PSFCH resources. For example, UEs belonging to the same group may transmit HARQ feedback using the same PSFCH resources.

For example, if group-cast option 2 is used for SL HARQ feedback, each UE performing group-cast communication may use different PSFCH resources for HARQ feedback transmission. For example, UEs belonging to the same group may transmit HARQ feedback using different PSFCH resources.

In the present disclosure, ACK may be referred to as HARQ-ACK, ACK information, or positive-ACK information, and NACK may be referred to as HARQ-NACK, NACK information, or negative-ACK information.

Sidelink grants may be semi-persistently configured by RRC or received dynamically on the PDCCH, which is autonomously selected by the MAC entity. The MAC entity may have a sidelink grant on the active SL BWP to determine the set of PSCCH periods in which SCI transmissions occur and the set of PSSCH periods in which SL-SCH transmissions associated with SCI occur.

When the MAC entity is configured to sidelink resource allocation mode 1, the MAC entity may perform actions based on each PDCCH occasion and each grant received for that PDCCH occasion.

UE/Base Station Behavior for consistent LBT Failures in SL Transmission

NR Unlicensed Spectrum (NR-U) refers to a mode that provides the technology necessary for cellular operators to integrate unlicensed spectrum into their wireless communication systems. NR-U may enable both uplink and downlink operations in unlicensed spectrum.

In NR-U, channel access for uplink and downlink relies on LBT functionality. The UE and/or base station may first sense the communication channel to determine if there is no communication before transmission. If the communication channel is a wideband unlicensed carrier, the channel sensing procedure of NR-U may rely on sensing energy levels in multiple subbands of the communication channel. The base station may configure LBT parameters (e.g., type/duration, clear channel assessment parameters, etc.) for the UE.

In NR-U, a UE may determine the time and location of transmission and reception based on the indications of the COT (Channel Occupancy Time) structure. The COT consists of multiple slots, and each slot may consist of downlink resources, uplink resources, or flexible resources.

In an NR-U system, both contiguous and interlaced uplink resource allocations may be supported while complying with the regulations. In interlace uplink resource allocation, the basic unit of resource allocation for an NR unlicensed channel may be an interlace. For example, a single interlace may consist of ten equally spaced resource blocks within a 20 MHz frequency bandwidth for a 15 kHz subcarrier spacing.

The base station may operate in dynamic or semi-static channel access mode. In the two-channel access mode, the base station and the UE may apply LBT (Listen-Before-Talk) before performing transmission in a cell configured with shared spectrum channel access. When LBT is applied, the transmitter may listen/detect the channel to determine whether the channel is free or busy, and may perform transmission only when free is detected on the channel.

NR radio access operating with shared spectrum channel access may operate in various modes where PCell, PSCell or SCell may operate in the shared spectrum and SCell may or may not be configured for uplink.

The UE may detect/detect a consistent (or, consecutive) uplink LBT failure. If the physical layer performs an LBT procedure before transmission and reception are performed, an LBT failure indication may be transmitted from the physical layer to the MAC entity. LBT failure detection is performed per BWP and may be performed based on all uplink transmissions within the corresponding BWP. If a persistent uplink LBT failure is detected on SCell(s), the UE may report the detected LBT failure to the corresponding gNB (e.g., MN in case of MCG, SN in case of SCG) via MAC CE in a serving cell other than the SCell(s) where the failure is detected.

If there is no resource available to transmit MAC CE, the UE may transmit a scheduling request (SR) (to the base station). If a persistent uplink LBT failure is detected in SpCell, the UE may initiate RACH by switching to another UL BWP with RACH resources configured in that cell and report the LBT failure through MAC CE. If multiple UL BWPs are available for switching, which UL BWP the UE selects may depend on the UE implementation.

For PSCell, if a persistent uplink LBT failure is detected in all UL BWPs with configured RACH resources, the UE may declare a SCG RLF and report the failure to the MN via 'SCGFailureInformation'. For PCell, if a persistent uplink LBT failure is detected in all UL BWP(s) with configured RACH resources, the UE may declare a radio link failure (RLF).

Channel access priority classes (CAPC) of radio bearer and MAC CE may be fixed or configurable:

- Fixed to lowest priority for padding BSR and recommended bit rate MAC CE;
- Fixed to highest priority for signaling radio bearer (SRB) 0, SRB1, SRB3 and other MAC CE;
- It may be configured by the base station for SRB2 and data radio bearer (DRB).

When selecting a CAPC for a DRB, the base station may consider the 5QIs of all multiplexed QoS flows in that DRB while also considering fairness between different traffic types and transmissions.

Table 10 below can indicate which CAPC should be used for which standardized 5 QI (QoS identifier), i.e. which CAPC should be used for a given QoS flow. In Table 10, a lower CAPC value can mean a higher priority.

[Table 10]

| CAPC | 5 QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |

Here, 5 QI may mean a value used to identify QoS requirements of a specific service or traffic flow. The 5 QI parameter may be used together with the CAP parameter to determine a priority level of a specific service or traffic flow. When performing Type 1 LBT for uplink TB transmission and CAPC is not indicated in the DCI, the terminal may select CAPC according to the following method:

- If only MAC CE(s) are included in the TB, the highest priority CAPC of the MAC CE(s) is used;
- If common control channel (CCCH) service data unit(s) are included in the TB, the highest priority CAPC is used;
- If dedicated control channel (DCCH) SDU(s) are included in the TB, the highest priority CAPC of the DCCH(s) is used;
- Otherwise, the lowest priority CAPC of the logical channel on which the MAC SDU is multiplexed in the TB may be used.

If SL transmission is supported in an unlicensed band, the UE may perform LBT for SL transmission. In a basic wireless communication system, CAPC is not mapped to the next SL radio bearer and MAC CE. Therefore, there is a problem that it is not clear how the UE should perform the channel access procedure for SL transmission.

The sidelink signaling radio bearer (SL-SRB) of an unprotected PC5-S message (e.g., direct link establishment request) for unicast NR sidelink communication may be named SL-SRB0.

The SL-SRB of the PC5-S message that sets up PC5-S security (e.g., Direct Link Security Mode Command and Direct Link Security Mode Complete) may be named SL-SRB1.

The SL-SRB of a protected PC5-S message, except for the direct link security mode completion, may be named SL-SRB2.

For NR sidelink U2N (UE-to-Network) relay, the sidelink signaling radio bearer of NR sidelink U2N relay related discovery messages (e.g., notification messages, request messages, and response messages) may be named SL-SRB4.

For NR sidelink L2 U2N relay operation, a PC5 relay RLC channel may be defined between the L2 U2N relay terminal and the L2 U2N remote UE. The name of the PC5 Relay RLC channel for transmitting SRB0 messages of the remote UE may be SL-RLC0.

(In response to 'RRCReconfiguration' message including 'reconfigureWithSync' indicating path switching to L2 U2N Relay UE) Sidelink RLC bearer for SRB1 RRC messages of Remote UE such as 'RRCResume', 'RRCReestablishment' and 'RRCReconfigurationComplete' messages can be named as SL-RLC1.

In RRC messages, 'sl-RLC-ChannelID' may be used to indicate the PC5 Relay RLC channel on the link between an L2 U2N Relay UE and an L2 U2N Remote UE.

For each PC5-RRC connection in unicast, one sidelink SRB (i.e., SL-SRB0) may be used to transmit PC5-S message before PC5-S security is established. One sidelink SRB (i.e., SL-SRB1) may be used to transmit PC5-S message to establish PC5-S security. One sidelink SRB (i.e., SL-SRB2) may be used to transmit PC5-S message after protected PC5-S security is established. One sidelink SRB (i.e., SL-SRB3) is used to transmit protected PC5-RRC signaling, which can be transmitted only after PC5-S security is established. For U2N Relay operation, one sidelink SRB (i.e., SL-SRB4) may be used to transmit and receive NR sidelink discovery message.

For unicast NR sidelink communication, AS security is configured to integrity protection of PC5 signaling (SL-SRB1, SL-SRB2 and SL-SRB3) and user data (SL-DRB), and may be configured to encryption of PC5 signaling (e.g., SL-SRB1, SL-SRB2 and SL-SRB3 for direct link security mode complete messages only) and user data (SL-DRB). Encryption and integrity protection algorithms and parameters for PC5 unicast links are exchanged by upper layer PC5-S messages and may be applied to the corresponding PC5-RRC connection of the AS.

When AS security is enabled for the PC5 unicast link of the higher layer, all messages in SL-SRB2 and SL-SRB3 and/or user data in SL-DRB of the corresponding PC5-RRC connection may be integrity protected and/or encrypted by PDCP.

When a key change is indicated from the higher layer for unicast of NR sidelink communication, the UE may reconfigure the PDCP entities of SL-SRB1, SL-SRB2, SL-SRB3 and SL-DRB in the corresponding PC5-RRC connection.

Hereinafter, the operation of the terminal/base station when consecutive LBT failures occur for SL transmission may be described.

The UE may perform logical channel prioritization based on the CAPC value.

For example, in the case of SL transmission for an SL grant in which the CPAC value is indicated as 1, the UE may select a possible destination for the mapped logical channel, configure a TB, and transmit the TB using the SL grant.

For example, when SL mode 1 (or SL resource allocation mode 1) is configured for a UE, the UE may receive an SL grant through DCI format 3_0. At this time, the base station can indicate the CAPC value of the SL grant through DCI format 3_0.

As another example, when SL mode 2 (or SL resource allocation mode 2) is configured for a UE, CAPC values may be mapped based on each resource pool and/or logical channel.

When a resource pool and a CAPC value are mapped, the UE may configure a TB by selecting a destination for which a logical channel for the mapped CAPC can be set for a selected sidelink grant generated from the resource pool.

As another example, a CAPC value may be configured based on a logical channel. When a selected sidelink grant is generated for a specific logical channel, the UE may apply a CAPC mapped to the logical channel to the selected sidelink grant. For the selected sidelink grant, a destination for which a logical channel for the mapped CAPC can be set may be selected to configure a TB.

CAPC for a logical channel may be mapped to the type of MAC CE transmitted by the logical channel, or the PQI value of SL data, PC5-S message, PC5-RRC message, logical channel priority, etc.

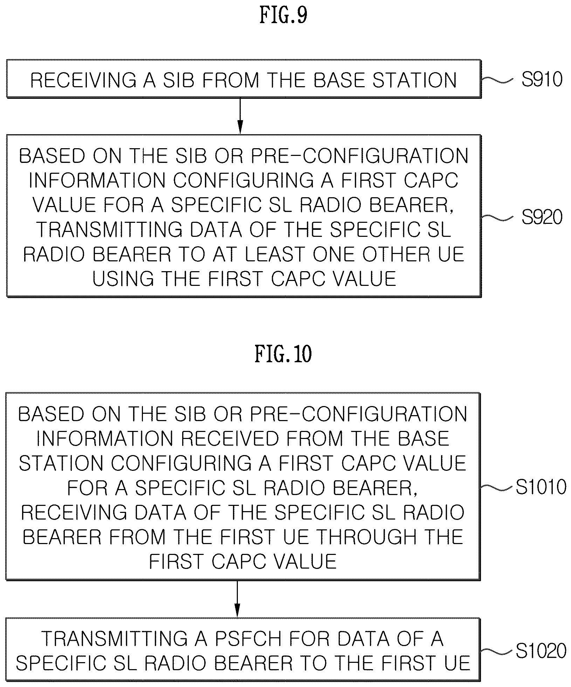

In FIG. 9, for convenience of explanation, the sidelink Tx (transmission) UE is referred to as the first UE, and the sidelink Rx (reception) UE is referred to as the second terminal/second terminal. In addition, in Fig. 9, the sidelink operation between the first UE and the second UE/third UE may operate in an unlicensed band/spectrum or a shared spectrum.

FIG. 9 is a diagram for describing a process in which a first terminal performs sidelink communication according to one embodiment of the present disclosure.

The first UE may receive a system information block (SIB) from the base station (S910).

Here, the SIB may include, but is not limited to, information for configuring a first CAPC (channel access priority class) value for a specific SL radio bearer. The SIB may not include information for setting a first CAPC value for a specific SL radio bearer.

Based on the SIB or pre-configuration information configuring a first CAPC value for a specific SL radio bearer, the first UE may transmit data of the specific SL radio bearer to at least one other UE using the first CAPC value (S920).

Here, the first UE may be in RRC (radio resource control) _IDLE mode, RRC _INACTIVE mode, or may be located outside network coverage.

For example, based on the first UE being in RRC_IDLE mode or RRC _INACTIVE mode, the first UE may determine the first CAPC value through SIB. As another example, based on the first UE being located out of network coverage, the first UE may determine the first CAPC value through pre-configuration information.

As another example of the present disclosure, based on the first UE being in RRC_connected mode, the first UE may determine the first CAPC through terminal dedicated signaling.

For example, the first CAPC value may be configured by information related to the SL logical channel, SL radio link control (RLC) channel ID, or resource pool via SIB or pre-configuration information. Here, the information related to the SL logical channel may include at least one of an SL logical channel ID (identity), an SL logical channel configuration, or a priority of the SL logical channel.

In another example of the present disclosure, based on the SIB or the pre-configuration information not configuring the first CAPC for the specific SL radio bearer, the first UE may transmit data of the specific SL radio bearer to at least one other terminal using the second CAPC value. Here, the second CAPC value may be based on a PQI (PC5 5G QoS (quality of service) indicator) corresponding to the specific SL radio bearer.

A first UE may transmit data of a specific SL radio bearer to at least one other terminal using LBT (listen before talk) based on a first CAPC value or a second CAPC value.

Here, based on the PC5-S message being exchanged with at least one other UE, the first UE may establish a direct link with the second UE.

FIG. 10 is a drawing for explaining a process in which a second UE performs communication according to one embodiment of the present disclosure.

Based on the SIB or pre-configuration information received from the base station configuring a first CAPC value for a specific SL radio bearer, the second UE may receive data of the specific SL radio bearer from the first UE through the first CAPC value (S1010).

However, this is only an example, and based on the SIB or pre-configuration information not configuring the first CAPC for a specific SL radio bearer, the second UE may receive data of the specific SL radio bearer from the first UE through the second CAPC value.

The method by which the first CAPC value and the second CAPC value are determined has been described with reference to Fig. 9, so redundant description will be omitted.

The second UE may transmit a physical sidelink feedback channel (PSFCH) for data of a specific SL radio bearer to the first UE (S1020).

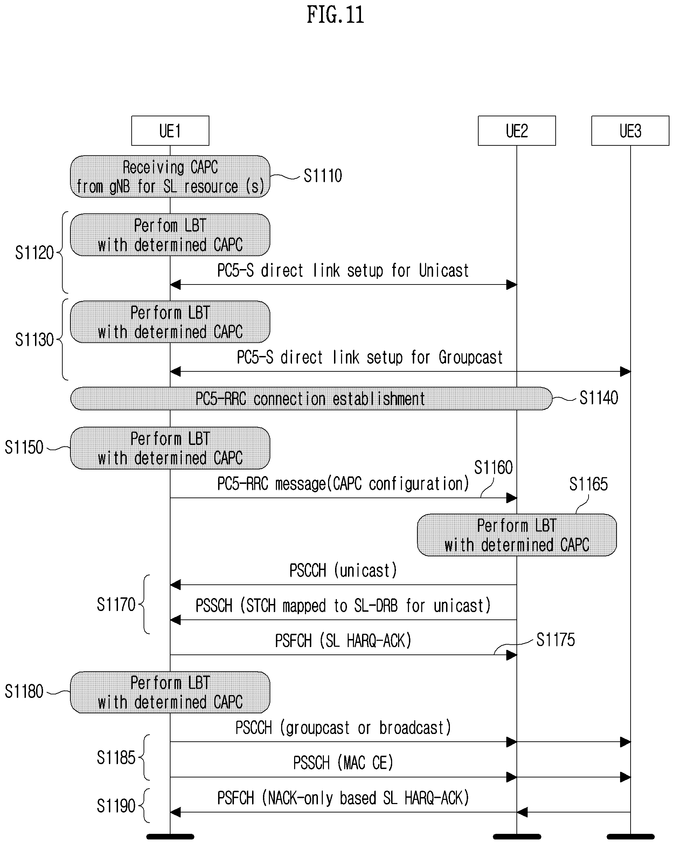

Hereinafter, an SL transmission method using a channel access procedure based on CAPC according to one embodiment of the present disclosure will be described with reference to FIG. 11.

UE #1 may receive an RRC message to configure CAPC for SL radio bearer(s) and SL MAC CE(s) (S1110).

The CAPC of the SL radio bearer(s) and MAC CE(s) may be fixed or configurable.

For example, data on the sidelink control channel (SCCH) may be fixed to the highest priority (or lowest priority) (e.g., depending on what signaling is carried on the SCCH) or may be configured by an RRC message.

For example, the SL CSI reporting MAC CE may be fixed to the highest priority (or lowest priority) or may be configured with an RRC message.

For example, the SL Inter-UE Coordination Request MAC CE and the SL Inter-UE Matching Reporting MAC CE may be fixed to the highest priority (or lowest priority) or may be configurable by RRC messages.

For example, the SL DRX Command MAC CE may be fixed to the highest priority (or lowest priority) or may be configured with an RRC message.

For example, all STCH (sidelink traffic channel) data may be configured as RRC messages.

For example, padding may be fixed to the lowest priority.

An example of how CAPC values are mapped to SL logical channels or SL MAC CE for SL transmission may be as shown in Table 11 below. A lower CAPC value may mean a higher priority. The lowest priority CAPC can be set to 4 and the highest priority CAPC may be configured to 1.

[Table 11]

| Fixed/Configurable CAPC | CAPC value | Type of SCCH, STCH, or SL MAC CE |
|---|---|---|
| Fixed CAPC | 2 | SCCH carrying unprotected PC5-S messages |
| Fixed CAPC | 1 | SCCH carrying PC5-S messages "Direct Security Mode Command" and "Direct Security Mode Complete" |
| Fixed CAPC | 1 | SCCH carrying other protected PC5-S messages |
| Fixed CAPC | 1 | SCCH carrying PC5-RRC message |
| Configurable CAPC | 2 | STCH for unicast |
| Configurable CAPC | 3 | STCH for groupcast |
| Configurable CAPC | 4 | STCH for broadcast |
| Fixed CAPC | 1 | SL logical channel for SL-RLC0 |
| Fixed CAPC | 1 | SL logical channel for SL-RLC1 |
| Configurable CAPC | 2 | STCH for SL-RLC channel on SRB2 of Remote UE |
| Configurable CAPC | 2 | STCH for SL-RLC channels for SRBs of Remote UEs other than SRB1 and SRB2 |
| Configurable CAPC | 3 | STCH for SL-RLC channel for DRB of Remote UE |

(continued)

| Fixed/Configurable CAPC | CAPC value | Type of SCCH, STCH, or SL MAC CE |
|---|---|---|
| Fixed CAPC | 2 | Sidelink UE-to-UE coordination request |
| Fixed CAPC | 2 | Sidelink UE-to-UE coordination information |
| Fixed CAPC | 2 | Sidelink DRX command |
| Fixed CAPC | 1 | Sidelink CSI Reporting |
| Fixed CAPC | 4 | Padding |

For configurable CAPC, a UE in RRC_IDLE or RRC_INACTIVE state may receive system information to configure CAPC for SL radio bearer and SL MAC CE. As another example, for configurable CAPC, a UE in RRC_CONNECTED state may receive a dedicated RRC message to configure CAPC for SL radio bearer and SL MAC CE. When out of network coverage, the UE may use SL pre-configuration to determine CAPC for SL transmission. For configuring SL radio bearer and SL MAC/PHY parameters, system information, dedicated RRC message or SL pre-configuration for a UE in RRC_IDLE, RRC_INACTIVE or RRC_CONNECTED or out of network coverage may use one or more of the following options to configure CAPC for SL radio bearer and SL MAC CE.

Option 1: CAPC may be configured per 'SL-LogicalChannelConfig' (i.e., for each SL logical channel configuration).

Option 2: CAPC may be configured per 'SL-RLC-ChannelConfig' (i.e., for each sl-RLC-ChannelID).

Option 3: CAPC may be configured per 'sl-LogicalChannelIdentity' (i.e., for each logical channel ID).

Option 4: CAPC may be configured per 'SL-PQFI' (i.e., for each PC5 QoS Flow Identifier (PQFI)).

Option 5: CAPC may be configured per priority of 'sl-LogicalChannelIdentity'.

Option 6: CAPC may be configured per resource pool.

Option 7: CAPC may be configured per Layer-2 destination ID or per pair of source ID and destination ID.

Specifically, system information, dedicated RRC messages or SL presets can set CAPC for SL radio bearer and SL MAC CE as shown in the table below.

As an example of the present disclosure, CAPC may be configured per 'SL-LogicalChannelConfig' (i.e., per each SL logical channel configuration). 'SL-LogicalChannelConfig' is an RRC parameter (i.e., information element) used to set SL logical channel parameters, and may be configured as shown in Table 12.

[Table 12]

```
        SL-LogicalChannelConfig information element
        SL-LogicalChannelConfig-r16 ::= SEQUENCE {
            sl-Priority-r16 INTEGER (1..8),
            sl-PrioritisedBitRate-r16 ENUMERATED {kBps0, kBps8, kBps16,
        kBps32, kBps64, kBps128, kBps256, kBps512,
        kBps1024, kBps2048, kBps4096, kBps8192, kBps16384, kBps32768,
                kBps65536, infinity},
                sl-BucketSizeDuration-r16 ENUMERATED {ms5, ms10, ms20, ms50,
            ms100, ms150, ms300, ms500, ms1000,
    spare7, spare6, spare5, spare4, spare3,spare2, spare1},
      sl-ConfiguredGrantType1Allowed-r16 ENUMERATED {true}
                    OPTIONAL, -- Need R
                    sl-HARQ-FeedbackEnabled-r16 ENUMERATED {enabled, disabled }
                    OPTIONAL, -- Need R
    sl-AllowedCG-List-r16 SEQUENCE (SIZE (0.. maxNrofCG-SL-1-
                r16)) OF SL-ConfigIndexCG-r16
    sl-AllowedSCS-List-r16 SEQUENCE (SIZE (1..maxSCSs)) OF
            SubcarrierSpacing OPTIONAL, -- Need R
      sl-MaxPUSCH-Duration-r16 ENUMERATED {ms0p02, ms0p04,
        ms0p0625, ms0p125, ms0p25, ms0p5, spare2, spare1}
        sl-LogicalChannelGroup-r16 INTEGER (0..maxLCG-ID) OPTIONAL, -
                        - Need R
                    sl-SchedulingRequestId-r16 SchedulingRequestId OPTIONAL, --
                     Need R
                     sl-LogicalChannelSR-DelayTimerApplied-r16 BOOLEAN OPTIONAL, -
                    - Need R
        channelAccessPriority-r16 INTEGER (1..4)}
```

As an example of the present disclosure, CAPC may be configured per 'SL-RLC-ChannelConfig' (i.e., per each 'sl-RLC-ChannelID'). 'SL-RLC-ChannelConfig' can specify SL RLC bearer configuration information for PC5 relay RLC channel between L2 U2N (UE-to-Network) relay UE and L2 U2N Remote UE, and may be configured as shown in Table 13.

[Table 13]

```
    SL-RLC-ChannelConfig information element
    SL-RLC-ChannelConfig-r17 ::= SEQUENCE {
  sl-RLC-ChannelID-r17 SL-RLC-ChannelID-r17,
   sl-RLC-Config-r17 SL-RLC-Config-r16, OPTIONAL,
   sl-MAC-LogicalChannelConfig-r17 SL-LogicalChannelConfig-r16
                  OPTIONAL,
 sl-PacketDelayBudget-r17 INTEGER (0..1023) OPTIONAL,
    channelAccessPriority-r16 INTEGER (1..4) ...}
```

As an example of the present disclosure, CAPC can be set per 'sl-LogicalChannelIdentity' (i.e. per each logical channel ID). As shown in Table 14 below, 'sl-LogicalChannelIdentity' can be included in 'SL-LogicalChannelConfigPC5'.

[Table 14]

```
    SL-LogicalChannelConfigPC5-r16 ::= SEQUENCE {
 sl-LogicalChannelIdentity-r16 LogicalChannelIdentity,
    channelAccessPriority-r16 INTEGER (1..4) }
```

As an example of the present disclosure, CAPC can be configured per SL-PQFI (i.e., per each PC5 QoS Flow Identifier (PQFI)). As disclosed in Table 15, SL-PQFI information may be included in the SL-PQFI configuration information.

[Table 15]

```
SL-PQFI-ToCAPCList SEQUENCE (SIZE (1..maxNrofPQFI)) OF SL-
PQFI-Config OPTIONAL, -- Need N
SL-PQFI-Config::= SEQUENCE {
SL-PQFI-r16 ::= INTEGER (1..64)
channelAccessPriority-r16 INTEGER (1..4)}
```

As an example of the present disclosure, CAPC may be configured per period of 'sl-LogicalChannelIdentiy'. As disclosed in Table 16, 'sl-LogicalChannelIdentiy' information may be configured.

[Table 16]

```
SL-LogicalChannelPrority ToCAPCList SEQUENCE (SIZE
(1..maxNrofPQFI)) OF SL-LogicalChannelPrority ToCAPC OPTIONAL,
-- Need N
SL-LogicalChannelPrority ToCAPC ::= SEQUENCE {
sl-Priority-r16 INTEGER (1..8),
channelAccessPriority-r16 INTEGER (1..4)}
```

In one example of the present disclosure, CAPC may be configured per resource pool. In another example, CAPC may be set per L2 (layer 2) destination ID or per source ID and destination ID. If system information, dedicated RRC message, or SL preset does not configure CAPC for SL radio bearer, CAPC may be determined based on PQI of SL radio bearer. PQI may be special 5 QI. PQI may be used as reference for parameter controlling QoS forwarding processing for packet via PC5 QoS characteristics (i.e., PC5 reference point). Standardized PQI value may be mapped one-to-one to standardized combination of PC5 QoS characteristics.

For example, mapping one or more PQI values to a particular CAPC may be specified in the manner described below.

When selecting a CAPC of an SLRB (SL Radio Bearer), the base station may consider the PQI of all multiplexed QoS flows in the corresponding DRB while also considering fairness between different traffic types and transmissions.

Table 17 below may indicate which CAPC should be used for a standardized PQI, i.e. which CAPC should be used for a given QoS flow. Here, a lower CAPC RKQT can mean a higher priority.

[Table 17]

| CAPC | PQI |
|---|---|
| 1 | 1, 3, 5 |
| 2 | 2, 7, |
| 3 | 4, 6, 8, 9 |
| 4 | - |

When SL mode 1 is configured for a UE, the UE may receive DCI format 3_0 or DCI format 3_x which may indicate CAPC for SL grant. The UE receiving the DCI may perform SL transmission using Type 1 or Type 2 channel access procedure with the indicated CAPC. When SL mode 2 is configured for a UE, when the UE generates a selected sidelink grant for a logical channel having SL data or SL MAC CE, the UE may select a resource pool that can be mapped to the logical channel of the SL data or SL MAC CE and determine a CAPC for SL transmission for the selected sidelink grant from the selected resource pool.

Here, for example, a CAPC or SL MAC CE mapped to SL data may be associated with the selected sidelink grant. As another example, a CAPC mapped to the selected resource pool may be associated with the selected sidelink grant.

If SL mode 1 is configured for the UE, when the UE performs type 1 LBT for SL transmission of TB on SL resource(s) and CAPC is not indicated in the DCI that allocates the SL resource(s); or

If SL mode 2 is configured for a UE, when the UE performs type 1 LBT for SL transmission of TB on SL resource(s) in the selected sidelink of the resource pool on the carrier and CAPC is not configured for the selected sidelink grant of the resource pool or the carrier, or CAPC for SL mode 2 is not indicated by the base station:

The UE may select CAPC as described below:

if only SL MAC CE(s) are included in the TB, the highest priority CAPC of the corresponding MAC CE(s) is used;

if SCCH SDU(s) carrying PC5-S signaling are included in the TB, the highest priority CAPC is used; or

if SCCH SDU(s) carrying PC5-RRC messages are included in the TB, the highest priority CAPC of the SCCH carrying the PC5-RRC messages is used;

if SCCH or STCH SDU(s) carrying RRC messages in SL-RLC0 are included in the TB, the highest priority CAPC of the SCCH or STCH carrying RRC messages in SL-RLC0 is used;

if SCCH or STCH SDU(s) carrying RRC messages in SL-RLC1 are included in the TB, the highest priority CAPC of the SCCH or STCH carrying RRC messages in SL-RLC1 is used; or

Otherwise, the lowest priority CAPC of the SL logical channel(s) with multiplexed MAC SDUs in the TB may be used.

One or more of the above-described methods for determining CAPC for SL transmission may be used in the following steps.

At step S1120, UE #1 performs LBT with the determined CAPC and can establish a direct link with UE #2 for unicast service by exchanging PC5-S signaling with UE #2.

UE #1 may transmit the SCCH carrying the PC5-S message using Type 1 or Type 2 channel access procedure with CAPC corresponding to the SCCH carrying the PC5-S message. The CAPC may also be used by UE #1 to transmit the SCI scheduling the SCCH.

At step S1130, UE #1 may perform LBT with the determined CAPC and transmit PC5-S signaling to UE #2 and UE #3 for groupcast service (or broadcast service).

UE #1 may transmit PSSCH carrying groupcast (or broadcast) signaling or data using Type 1 or Type 2 channel access procedure with CAPC corresponding to groupcast SL transmission (or broadcast SL transmission) (i.e., CAPC corresponding to cast-type).

Alternatively, for SL transmission, CAPC may be determined based on the destination of groupcast (or broadcast). That is, CAPC may correspond to the destination ID of groupcast (or broadcast) which is configured by system information, dedicated RRC message or preset. If the destination is not configured by RRC message, a default CAPC may be determined for the corresponding SL transmission. The CAPC may also be used by UE #1 to transmit SCI scheduling PSSCH.

A PC5-RRC connection may be established between UE #1 and UE #2 (S1140). UE #1 may perform LBT with the determined CAPC (S1150).

UE #1 may transmit a PC5-RRC message to UE #2 to configure a SL radio bearer and MAC CE (S1160). In the PC5-RRC message, CAPC may be configured for a specific SL radio bearer or a specific SL MAC CE.

Specifically, UE #1 may transmit the SCCH carrying the PC5-RRC message using a Type 1 or Type 2 channel access procedure with a CAPC corresponding to the SCCH carrying the PC5-RRC message. The CAPC may also be used by UE #1 to transmit an SCI scheduling the SCCH.

UE #2 can perform LBT with CAPC determined based on the RRC message received from UE #1 (S1165). At step S1170, UE #2 may transmit PSSCH carrying SL data of SL-DRB to UE #1 after transmitting SCI to UE #1.

UE #1 may receive SCI and PSSCH from UE #2, and transmit SL HARQ-ACK for PSCCH transmission of SL data of SL-DRB to UE #2 (S1175).

Specifically, UE #2 may transmit PSSCH carrying SCI and SL data of SL-DRB to UE #1. UE #2 may transmit SCI and PSSCH carrying TB including STCH carrying SL data of SL-DRB using Type 1 or Type 2 channel access procedure with CAPC corresponding to STCH based on CAPC configured by UE #1 or CAPC indicated/configured by gNB in the above-described step.

UE #2 may use the CAPC indicated/configured by the base station. For example, if UE #2 is configured to SL mode 1 (i.e., SL resource allocation mode 1), CAPC may be indicated by DCI and PSSCH that allocate SL resources of SCI. In this case, UE #2 may use the CAPC indicated by the base station through DCI.

When UE #2 is configured to SL mode 2 (i.e., SL resource allocation mode 2), CAPC may be configured by the base station via RRC message (e.g., for the corresponding STCH of SL-DRB). If the CAPC configured by the base station is not available, UE #2 may use the CAPC configured by UE #2.

If the CAPC configured by the base station and the CAPC set by UE #1 cannot be used, UE #2 may use the CAPC mapped to the PQI of the SL-DRB in Table 17 or the CAPC configured by the SL pre-configuration.

SCI scheduling TB of SL data may indicate CAPC for PSFCH transmission carrying HARQ-ACK for TB or RLC ACK for SL data.

UE #1 may transmit PSFCH carrying HARQ-ACK using Type 1 or Type 2 channel access procedure with CAPC indicated by SCI received from UE #2 at step S1170.

For example, if the SCI does not indicate a CAPC for the HARQ-ACK transmission, UE #1 may transmit the PSFCH carrying the HARQ-ACK using either Type 1 or Type 2 channel access procedure with one of the following CAPCs:

Option 1: Fixed CAPC for SL HARQ-ACK
Option 2: CAPC configured for the destination indicated by the received SCI and PSSCH
Option 3: CAPC configured for the resource pool, carrier or cell on which the SL HARQ-ACK is transmitted
Option 4: CAPC associated with the selected sidelink grant on which the SL HARQ-ACK is transmitted
Option 5: Default CAPC
Option 6: CAPC configured by UE #2 in an RRC message for the above-mentioned purpose
Option 7: CAPC configured by the base station in an RRC message for the above-mentioned purpose

UE #1 may perform LBT with the determined CAPC (S1180). At step S1185, UE #1 may transmit PSCCH carrying SCI and SL MAC CE to UE #2 and/or UE #3. UE #2 and/or UE #3 may transmit PSFCH including SL HARQ-ACK based on NACK only to UE #1 (S1190).

UE #1 may transmit SCI and PSSCH using Type 1 or Type 2 channel access procedure with fixed CAPC for SL MAC CE.

Alternatively, if the SL MAC CE (e.g., SL CSI reporting MAC CE) is triggered by the SCI transmitted by UE #2, the CAPC indicated by UE #2 (i.e., by the SCI) may be used for either Type 1 or Type 2 channel access procedures.

If SCI does not indicate CAPC, UE #1 may transmit SCI and PSCCH using Type 1 or Type 2 channel access procedure with one of the CAPC according to the following options.

Option 1: Fixed CAPC for SL HARQ-ACK
Option 2: CAPC configured for destination indicated by received SCI and PSSCH
Option 3: CAPC configured for resource pool, carrier or cell where SL HARQ-ACK is transmitted
Option 4: CAPC associated with selected sidelink grant where SL HARQ-ACK is transmitted
Option 5: Default CAPC
Option 6: CAPC set by UE#2 in RRC message for the purpose described above
Option 7: CAPC set by base station in RRC message for the purpose described above

In the above-described step, the MAC entity of UE #1 or UE #2 may perform a logical channel priority procedure for each SL resource (i.e., each SL grant scheduled by SCI) to generate a MAC PDU (i.e., TB) for SL resource transmission according to the method described below.

Configuring logical channel priority in MAC

For each SCI and SL grant corresponding to a new HARQ transmission from UE #1 or UE #2, the MAC entity of the UE may select a destination associated with one of the unicast, groupcast and broadcast logical channels having at least one of the MAC CE and the highest priority logical channel among the logical channels satisfying both the following conditions and the MAC CE for the SL grant associated with the SCI:

- SL data can be used for transmission; and
- If there exists a logical channel having SBj > 0, SBj > 0; and
- If the SL grant is of type 1, 'sl-configuredGrantType1Allowed' (if configured) is set to 'true';
- (if configured) 'sl-AllowedCG-List' includes the configured grant indices associated with the SL grant;
- 'sl-HARQ-FeedbackEnabled' is set to disabled if PSFCH is not configured for SL grants related to SCI;
- SL data or SL MAC CE may be mapped to a CAPC value lower than or equal to the CAPC value indicated or configured for the SL grant (e.g., based on the PQI of the SL data or the SL logical channel of the SL data CAPC).

The operation that SL data or SL MAC CE is mapped to a CAPC value lower than or equal to the CAPC value indicated or configured for the SL grant may be performed when the CAPC is indicated by the DCI indicating the SL grant, when the CAPC is indicated by the SCI triggering the SL data or SL MAC CE, when the CAPC is configured by the RRC message for the SL grant, or when the CAPC is associated with a selected sidelink grant of the SL grant.

If multiple destinations have a logical channel that satisfies all of the above conditions and has the same highest priority, or if multiple destinations have a logical channel that has the same priority as the MAC CE and/or MAC CE and satisfies all of the above conditions, the selection of a particular destination among the above-described destinations may be determined by the UE implementation.

Then, the UE may select a logical channel that satisfies all of the following conditions among the logical channels belonging to the selected destination.

- SL data can be used for transmission; and
- If there is a logical channel with SBj > 0, SBj > 0; and
- If the SL grant is a configured grant type 1, (if configured) 'sl-configuredGrantType1Allowed' is set to 'true';
- (if configured) 'sl-AllowedCG-List' includes the configured grant indices associated with the SL grant; and

 1> If PSFCH is configured for a sidelink grant associated with SCI:

  2> If 'sl-HARQ-FeedbackEnabled' is set to enabled for the highest priority logical channel satisfying the above conditions, then 'sl-HARQ-FeedbackEnabled' is set to enabled; Or
  2> If 'sl-HARQ-FeedbackEnabled' is set to disabled for the highest priority logical channel satisfying the above conditions, 'sl-HARQ-FeedbackEnabled' may be set to disabled.

 1> Otherwise:

  4> 'sl-HARQ-FeedbackEnabled' may be set to disabled.

- SL data or SL MAC CE may be mapped to a CAPC value lower than or equal to the CAPC value indicated or configured for the SL grant (e.g., based on the PQI of the SL data or the SL logical channel of the SL data CAPC).

If the CAPC is indicated by the DCI indicating the SL grant, if the CAPC is indicated by the SCI triggering the SL data or SL MAC CE, if the CAPC is configured by the RRC message for the SL grant, or if the CAPC is an SL grant of the SL; or if the CAPC is associated with a selected sidelink grant of the SL grant, an operation may be performed where the SL data or SL MAC CE is mapped to a CAPC value lower than or equal to the CAPC value indicated or configured for the SL grant.

The HARQ feedback enable/disable indicator may be configured to disabled for transmission of MAC PDUs carrying only CSI reporting MAC CE, sidelink DRX command MAC CE, sidelink inter-UE coordination request MAC CE, or sidelink inter-UE alignment information MAC CE.

For each SCI and SL grant corresponding to a new transmission, the MAC entity may generate MAC PDUs including SL data only on the logical channel (s) selected for the HARQ entity. The terminal may transmit MAC PDUs (i.e., TBs) using either Type 1 or Type 2 channel access procedures with the CAPC indicated or set for the SL grant.

In describing the present disclosure, sidelink transmission, grant and resources may be replaced with uplink transmission, grant and resources.

By the above-described embodiment, (in particular, when a UE performs SL transmission in an unlicensed band and another terminal instructs CAPC during the SL transmission) a UE may transmit a MAC control element or SL HARQ feedback using a channel access procedure with CAPC in response to an SL transmission from another UE.

General Device to which the Present Disclosure may be applied

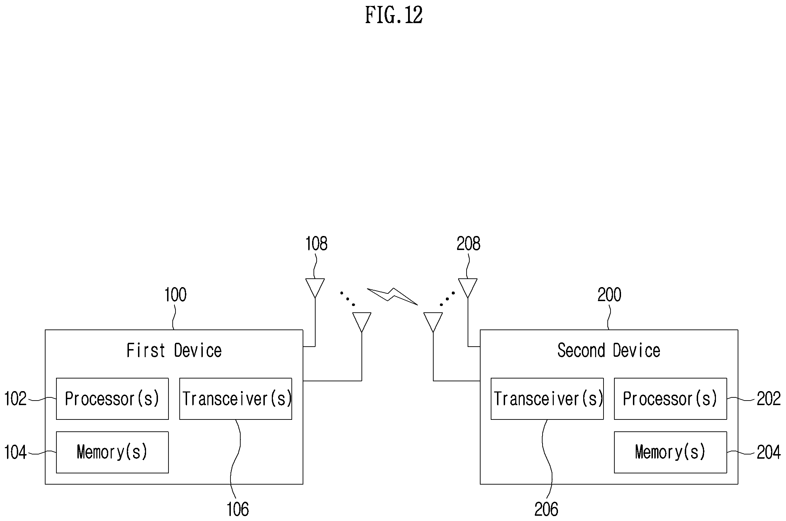

FIG. 12 illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs (Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method of performing sidelink (SL) communication by a first user equipment (UE) in a wireless communication system, the method comprising:

   receiving a system information block (SIB) from a base station; and
   based on the SIB or pre-configuration information configuring a first CAPC (channel access priority class) value for a specific SL radio bearer, transmitting data of the specific SL radio bearer to at least one other UE using the first SL CAPC value,
   wherein, based on the SIB or the pre-configuration information not configuring the first CAPC for the specific SL radio bearer, data of the specific SL radio bearer is transmitted to at least one other UE using the second CAPC value, and
   wherein the second CAPC value is based on a PQI (PC5 5G QoS indicator) corresponding to the specific SL radio bearer.

2.   The method of claim 1, wherein:
   the first UE is in RRC (radio resource control)_IDLE mode, RRC_INACTIVE mode, or is located outside of network coverage.

3.   The method of claim 2, wherein:
   based on the SIB or pre-configuration information configuring the first CAPC value for the specific SL radio bearer:

   based on the first UE being in RRC_IDLE mode or RRC_INACTIVE mode, the first CAPC is determined based on the SIB, and
   based on the first UE being located outside the network coverage, the first CAPC is determined based on the pre-configuration information

4.   The method of claim 1, wherein:
   based on the first UE being in RRC_connected mode, the first CAPC is determined through UE dedicated signaling.

5. The method of claim 3, wherein:
the first CAPC value is configured by each SL logical channel-related information, a SL RLC (radio link control) channel ID or resource pool through the SIB or the pre-configuration information.

6. The method of claim 5, wherein:
information related to the SL logical channel includes at least one of an SL logical channel ID (identity), an SL logical channel configuration, or a priority of a SL logical channel.

7. The method of claim 1, wherein:
data of the specific SL radio bearer is transmitted to at least one other UE using LBT (listen before talk) based on the first CAPC value or the second CAPC value.

8. The method of claim 1, wherein:
based on a PC5-S message being exchanged with a second UE among the at least one other UE, a direct link is established between the first UE and the second UE.

9. A first user equipment (UE) performing sidelink (SL) communication in a wireless communication system, the first UE comprising:

at least one transceiver; and
at least one processor coupled to the at least one transceiver,
wherein the at least one processor is configured to:

receive a system information block (SIB) from a base station through the at least one transceiver; and
based on the SIB or pre-configuration information configuring a first CAPC (channel access priority class) value for a specific SL radio bearer, transmit data of the specific SL radio bearer to at least one other UE using the first SL CAPC value through the at least one transceiver,
wherein, based on the SIB or the pre-configuration information not configuring the first CAPC for the specific SL radio bearer, data of the specific SL radio bearer is transmitted to at least one other UE using the second CAPC value, and
wherein the second CAPC value is based on a PQI (PC5 5G QoS indicator) corresponding to the specific SL radio bearer.

10. A method for performing sidelink (SL) communication by a second user equipment (UE) in a wireless communication system, the method comprising:

based on a system information block (SIB) or pre-configuration information received from a base station configuring a first CAPC (channel access priority class) value for a specific SL radio bearer, receiving data of the specific SL radio bearer from a first UE through the first CAPC value; and
transmitting a physical sidelink feedback channel (PSFCH) for data of the specific SL radio bearer to the first UE,
wherein based on the SIB or the pre-configuration information not configuring the first CAPC for the specific SL radio bearer, the data of the specific SL radio bearer is received from the first UE through a second CAPC value, and
wherein the second CAPC value is based on the PQI (PC5 5G QoS indicator) corresponding to the specific SL radio bearer.

11. A second user equipment (UE) performing sidelink (SL) communication in a wireless communication system, the first UE comprising:

at least one transceiver; and
at least one processor coupled to the at least one transceiver, wherein the at least one processor is configured to:

based on a system information block (SIB) or pre-configuration information received from a base station configuring a first CAPC (channel access priority class) value for a specific SL radio bearer, receive data of the specific SL radio bearer from a first UE through the first CAPC value through the at least one transceiver; and
transmit a physical sidelink feedback channel (PSFCH) for data of the specific SL radio bearer to the first UE through the at least one transceiver,

wherein based on the SIB or the pre-configuration information not configuring the first CAPC for the specific SL radio bearer, the data of the specific SL radio bearer is received from the first UE through a second CAPC value, and

wherein the second CAPC value is based on the PQI (PC5 5G QoS indicator) corresponding to the specific SL radio bearer.

12. A processing device configured to control a first user equipment (UE) to perform sidelink (SL) communication in a wireless communication system, the processing device comprising:

at least one processor; and
at least one computer memory operatively coupled to the at least one processor and storing instructions for performing operations upon being executed by the at least one processor;
the operations include:

receiving a system information block (SIB) from a base station; and
based on the SIB or pre-configuration information configuring a first CAPC (channel access priority class) value for a specific SL radio bearer, transmitting data of the specific SL radio bearer to at least one other UE using the first SL CAPC value,
wherein, based on the SIB or the pre-configuration information not configuring the first CAPC for the specific SL radio bearer, data of the specific SL radio bearer is transmitted to at least one other UE using the second CAPC value, and
wherein the second CAPC value is based on a PQI (PC5 5G QoS indicator) corresponding to the specific SL radio bearer.

13. At least one non-transitory computer readable medium storing at least one instruction,
based on the at least one instruction being executed by at least one processor, an apparatus performing sidelink (SL) communication in a wireless communication system controls to:

receive a system information block (SIB) from a base station; and
based on the SIB or pre-configuration information configuring a first CAPC (channel access priority class) value for a specific SL radio bearer, transmit data of the specific SL radio bearer to at least one other UE using the first SL CAPC value,
wherein, based on the SIB or the pre-configuration information not configuring the first CAPC for the specific SL radio bearer, data of the specific SL radio bearer is transmitted to at least one other UE using the second CAPC value, and
wherein the second CAPC value is based on a PQI (PC5 5G QoS indicator) corresponding to the specific SL radio bearer.

## FIG.1

## FIG.2

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$    $l = 14 \cdot 2^{\mu} - 1$

FIG.4

# FIG.5

FIG.6

EP 4 518 556 A1

INITIAL CELL SEARCH — SYSTEM INFORMATION RECEPTION — RANDOM ACCESS PROCEDURE — GENERAL DL/UL Tx/Rx

PSS/SSS& [DLRS]& PBCH — PDCCH/PDSCH (BCCH) — PRACH — PDCCH/PDSCH — PUSCH — PDCCH/PDSCH — PDCCH/PDSCH — PUSCH/PUCCH

S601  S602  S603  S604  S605  S606  S607  S608

· DL/UL ACK/NACK
· UE CQI/PMI RI REPORT USING PUSCH AND PUCCH

FIG.7

(a)                                                    (b)

FIG.8

(a)                        (b)                        (c)

● : TRANSMITTING UE
▨ : RECEIVING UE

## FIG.9

| RECEIVING A SIB FROM THE BASE STATION | S910 |

| BASED ON THE SIB OR PRE-CONFIGURATION INFORMATION CONFIGURING A FIRST CAPC VALUE FOR A SPECIFIC SL RADIO BEARER, TRANSMITTING DATA OF THE SPECIFIC SL RADIO BEARER TO AT LEAST ONE OTHER UE USING THE FIRST CAPC VALUE | S920 |

## FIG.10

| BASED ON THE SIB OR PRE-CONFIGURATION INFORMATION RECEIVED FROM THE BASE STATION CONFIGURING A FIRST CAPC VALUE FOR A SPECIFIC SL RADIO BEARER, RECEIVING DATA OF THE SPECIFIC SL RADIO BEARER FROM THE FIRST UE THROUGH THE FIRST CAPC VALUE | S1010 |

| TRANSMITTING A PSFCH FOR DATA OF A SPECIFIC SL RADIO BEARER TO THE FIRST UE | S1020 |

# FIG.11

| UE1 | UE2 | UE3 |

Receiving CAPC
from gNB for SL resource (s) ~ S1110

Perform LBT
with determined CAPC

S1120

PC5-S direct link setup for Unicast

Perform LBT
with determined CAPC

S1130

PC5-S direct link setup for Groupcast

PC5-RRC connection establishment ~ S1140

Perform LBT
with determined CAPC

S1150

PC5-RRC message(CAPC configuration) S1160

S1165

Perform LBT
with determined CAPC

PSCCH (unicast)

S1170

PSSCH (STCH mapped to SL-DRB for unicast)

PSFCH (SL HARQ-ACK) ~ S1175

Perform LBT
with determined CAPC

S1180

PSCCH (groupcast or broadcast)

S1185

PSSCH (MAC CE)

S1190

PSFCH (NACK-only based SL HARQ-ACK)

# FIG.12

EP 4 518 556 A1

**EP 4 518 556 A1**

<table>
<tr><td colspan="2" align="center">**INTERNATIONAL SEARCH REPORT**</td><td>International application No.<br><br>**PCT/KR2023/005733**</td></tr>
</table>

**A. CLASSIFICATION OF SUBJECT MATTER**

**H04W 74/08**(2009.01)i; **H04W 76/14**(2018.01)i; **H04W 76/11**(2018.01)i; **H04L 1/18**(2006.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 74/08(2009.01); H04W 28/00(2009.01); H04W 74/04(2009.01); H04W 76/14(2018.01); H04W 92/16(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1-제2 CAPC(first and second channel access priority classes), SL 무선 베어러 (sidelink radio bearer), PQI(PC5 5G QoS indicator), 전송 블록(transport block), SL 그랜트(grant), 우선순위(priority)

**C. DOCUMENTS CONSIDERED TO BE RELEVANT**

| Category* | Citation of document, with indication, where appropriate, of the relevant passages | Relevant to claim No. |
|---|---|---|
| X | US 2021-0298070 A1 (QUALCOMM INC.) 23 September 2021 (2021-09-23)<br>See paragraphs [0004]-[0116]; claim 1; and figures 3 and 9. | 1,2,4,7-10,12,13 |
| A | | 3,5,6,11 |
| A | 3GPP TS 38.300 V16.8.0, 3GPP; TSG RAN; NR; NR and NG-RAN Overall Description; Stage 2 (Rel. 16). 23 December 2021.<br>See pages 36-37. | 1-13 |
| A | WO 2021-041164 A1 (QUALCOMM INC.) 04 March 2021 (2021-03-04)<br>See paragraphs [0002]-[0062]; and figure 2. | 1-13 |
| A | WO 2022-046441 A1 (QUALCOMM INC.) 03 March 2022 (2022-03-03)<br>See paragraphs [0078]-[0087]; and figure 7. | 1-13 |
| A | US 2022-0086908 A1 (LG ELECTRONICS INC.) 17 March 2022 (2022-03-17)<br>See paragraphs [0257]-[0262]. | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005733**

| Patent document cited in search report | | | Publication date (day/month/year) | Patent family member(s) | | | Publication date (day/month/year) |
|---|---|---|---|---|---|---|---|
| US | 2021-0298070 | A1 | 23 September 2021 | CN | 115516906 | A | 23 December 2022 |
| | | | | EP | 4122237 | A1 | 25 January 2023 |
| | | | | WO | 2021-188585 | A1 | 23 September 2021 |
| WO | 2021-041164 | A1 | 04 March 2021 | CN | 114303412 | A | 08 April 2022 |
| | | | | EP | 4018762 | A1 | 29 June 2022 |
| | | | | US | 11304086 | B2 | 12 April 2022 |
| | | | | US | 11638173 | B2 | 25 April 2023 |
| | | | | US | 2021-0058819 | A1 | 25 February 2021 |
| | | | | US | 2022-0210689 | A1 | 30 June 2022 |
| WO | 2022-046441 | A1 | 03 March 2022 | | None | | |
| US | 2022-0086908 | A1 | 17 March 2022 | WO | 2020-145784 | A1 | 16 July 2020 |

Form PCT/ISA/210 (patent family annex) (July 2022)